# EUROPEAN PATENT APPLICATION

(11) **EP 1 568 565 A2**
(43) Date of publication of application: **31.08.2005**
(21) Application number: 05004009.6
(22) Date of filing: 24.02.2005
(51) Int. Cl.: B62B 3/14

(54) **Display aid**

(30) Priority: 25.02.2004 US 785044
(71) Applicant: Cohen, Yoel, Ness Ziona 74037 (IL); Shvadron, Hagai, Kfar Saba 44286 (IL)
(72) Inventor: Cohen, Yoel, Ness Ziona 74037 (IL); Shvadron, Hagai, Kfar Saba 44286 (IL)
(74) Representative: Modiano, Guido

(57) **Abstract**

A display aid comprising a user interface portion and a handle mounting portion, wherein said handle mounting portion is removably attachable to a handle of a cart by at least partially embracing a portion of the handle.

## Description

### FIELD OF THE INVENTION

This invention relates to cart accessories, in particular to versatile list holders or displays that are attachable to a cart or the like, useful in supermarkets or stores for shopping, in airports for carrying luggage, hospitals for carrying equipment, and other applications.

### BACKGROUND OF THE INVENTION

Self-service shopping with the aid of a cart has gained virtually universal acceptance. Almost invariably, a shopping list is used to optimise the shopping activity at any one store or supermarket, and if properly organized the list ensures that on the one hand no time is wasted unnecessarily by grouping items according to where they are to be found in the store, and on the other hand that no shopping items are forgotten. Virtually constant manipulation of the list is required to tick off items as they are placed into the cart, and to write new items as they are recalled by the shopper as missing on the list. As such, the list must be periodically removed from and replaced into a pocket or purse, which is a frustrating activity and which can cause damage to the list. Alternatively, the shopper may try to hold the list while at the same time navigating the cart so that the list is always at hand. This is also frustrating to the shopper, particularly as sometimes both hands are needed to place items into the cart and/or for pushing the same. Placing the list in the cart itself between manipulations can also be a problem since it requires the shopper to look for the list among the shopping each time the list is needed, which is not desirable, and the list can also soon get mixed up with the shopping and difficult to retrieve. In any case, to write on the list, or even to tick off items can also be a problem, since it can often be difficult to find a suitable surface on which to rest the list in order to write on it.

Shopping list holders are known for attaching a list to a shopping cart to alleviate the above frustrations and difficulties. In US 5,154,330 a method is described for fastening a list holder on a vertical rod of a child seat on a standard shopping cart. A fastener in the form of a hook connected to the list holder via a swiveling joint, such as to permit the holder to be positioned at two distinct angles of repose.

EP 855331 and EP 384,855 describe list holders that are attached to a cart via the automatic deposit lock installed on the handles of some shopping carts, and are thus unusable on regular carts that do not have such a lock.

US 6,250,006, US 3,964,134 and US 3,539,204 describe clipboards that are mounted to a shopping cart, in which clamps or clips mount the boards to the cart in a horizontal position.

US 4,512,504 describes an organizer having a notepad, in which a flap wraps around and secures the holder to the handle of a cart.

In US 3,881,267, a list holder is disclosed for mounting onto a handle of a cart at any desired position by means of C-clamps which are screwed together over the handle.

In WO 94/20309 a support consists of a plate made from two flat members hinged along a fold portion, wherein shopping lists may be attached to the inner surface of the plate. A flexible tab loops around a shopping cart handle and reversibly attaches to the outer surface of one of the flat members, enabling the support to dangle freely from the handle. The flat members may be folded one over the other via the fold portion and kept in place via a stud.

### SUMMARY OF THE INVENTION

In accordance with the present invention, a display aid is provided which is both simple to install and use, and which is relatively inexpensive to produce. No special attachments on the cart or the like are required. In some embodiments, the aid is of integral construction, and manufactured from a blank of resilient material, e.g. a rigid though pliable material such as plastic, cardboard, etc. However, the display aid may also be formed of several portions integrated together.

Herein the term "*cart*" includes any form of cart, including shopping carts, trolleys used in airports to carry luggage, baby prams and pushchairs, bicycles and indeed any other vehicle that may be used for carrying items of interest for a user and which comprises a handle for holding or pushing by the user. Alternatively, the term shopping cart also includes other structures, static or dynamic, on which it may be desirable to display a list, chart or the like such as for example a patient's bed in a hospital, which bed may be static or transportable, and which comprises a suitable bar or handle on which the list may be mounted.

Herein, the term "*shopping list*" refers to any list that contains a plurality of items that may be of interest to a person particularly when the person requires to purchase or otherwise procure such items from a supplier. The list may therefore include regular shopping lists, where a customer lists the items that he or she wishes to purchase from a store, but also includes other lists such as for example lists of books that one may wish to borrow from a lending library, or lists of stationary that one needs to procure from a central depot for an office, and so on. Alternatively, the list may also include task lists for an airline passenger in an airport, for example, check in time, departure time and so on. Alternatively, the list may include medical check lists and/or charts for patients which may be mounted onto trolleys carrying medical equipment, to a patient's bed, or the like.

According to the present invention there is provided a display aid comprising a user interface portion and a handle mounting portion, wherein said handle mounting portion is removably attachable to a handle of a cart by at least partially embracing a portion of the handle.

According to one embodiment of the invention there is provided a display aid comprising a user interface portion and a handle mounting portion, wherein said handle mounting portion comprises at least a pair of hooks for removable bracing at least a portion of a handle of a cart such that when it is mounted over the handle said user interface portion loosely dangles.

The display aid, according to several embodiments, comprises a user interface portion and a handle mounting portion, wherein said handle mounting portion is deformable between a first position in which it is substantially flat and a second position where it is deformed so as to attach over a handle of a cart.

By one particular embodiment the handle mounting portion comprises a double-lobed base portion and a hook portion circumscribing the base portion optionally, the hook portions are joined to one another via an integral hinge or a film hinge extending about a central fold line of the handle mounting portion, and said hook portions are hinges at their other ends to a portion adjoining the user interface portion, at inclined fold lines by integral hinges or a film hinges. According to one particular design, the inclined fold lines extend at an angle if between about 30° and 60° with respect to the central fold line.

The arrangement is such that when the handle mounting portion is attached to a handle, the hooks partially embrace the handle and wherein upon depressing the hook portions towards one another they assume a butterfly like configuration giving rise to a handle bracing zone formed at the absent portion of the base portion.

The user interface portion comprises at a front surface thereof a data pad which may be a writing pad (e.g. a stack of detachable paper sheets), an erasable writing surface, at least a partial preset list of items with a tic box associated with each item, and it is likely that the user interface portion comprises a writing utensil holding portion.

The display aid may have added value as a commercial advertising article, wherein at least a portion of the display aid may bear a commercial motive for advertisement purposes, or at least a front surface of the display aid comprises commercial display portion, or the display aid comprises at least a portion shaped in the form of a commercial element, e.g. the shape of a well known beverage bottle, etc.
At least the handle mounting portion is made of a sheet of rigid though pliable material and typically the user interface portion is integrated therewith, whereby the article is formed out of a uniform sheet of material, e.g. plastic material, cardboard, etc.

### BRIEF DESCRIPTION OF THE DRAWINGS

In order to understand the invention and to see how it may be carried out in practice, several embodiments will now be described, by way of non-limiting examples only, with reference to the accompanying drawings, in which:
**Fig. 1a** is a front view of a display aid according to a first embodiment of the present invention;
**Fig. 1b** is a side view of the display aid of Fig. 1a;
**Fig. 2** illustrates how the display aid of Fig. 1a is attached to a handle/push-bar of a cart;
**Fig. 3** is a rear view of a top portion of the display aid attached to the handle;
**Fig. 4a** is a front view of the display aid attached to the handle;
**Fig. 4b** is a side view of the display aid attached to the handle;
**Figs. 5a** and **5b** are a front view and a side view, respectively, of a display aid according to a different embodiment of the present invention;
**Fig. 5c** is a sectioned elevation taken along line X-X in Fig. 5b;
**Fig. 6a** is an isometric view of a display aid according to a modification of the invention, while being attached to a handle of a cart;
**Fig. 6b** is a rear view of a top portion of the display aid of Fig. 6a, while attached to a handle of a cart;
**Fig. 7a** is a planar view of a display aid according to a different embodiment of the present invention;
**Fig. 7b** illustrates the display aid of Fig. 7a, while mounted on a handle of cart;
**Fig. 7c** is a rear view of a top portion of the display aid of Fig, 7a, while attached to a handle of a cart;
**Fig. 8a** is a planar view of a display aid according to another embodiment of the present invention;
**Fig, 8b** illustrates the display aid of Fig. 8a, while mounted on a handle of cart; and
**Figs. 9a** and **9b** are a planar view and a side view, respectively, of still another embodiment of the invention, where the display aid is fitted with a writing utensil support.

### DETAILED DESCRIPTION OF THE INVENTION

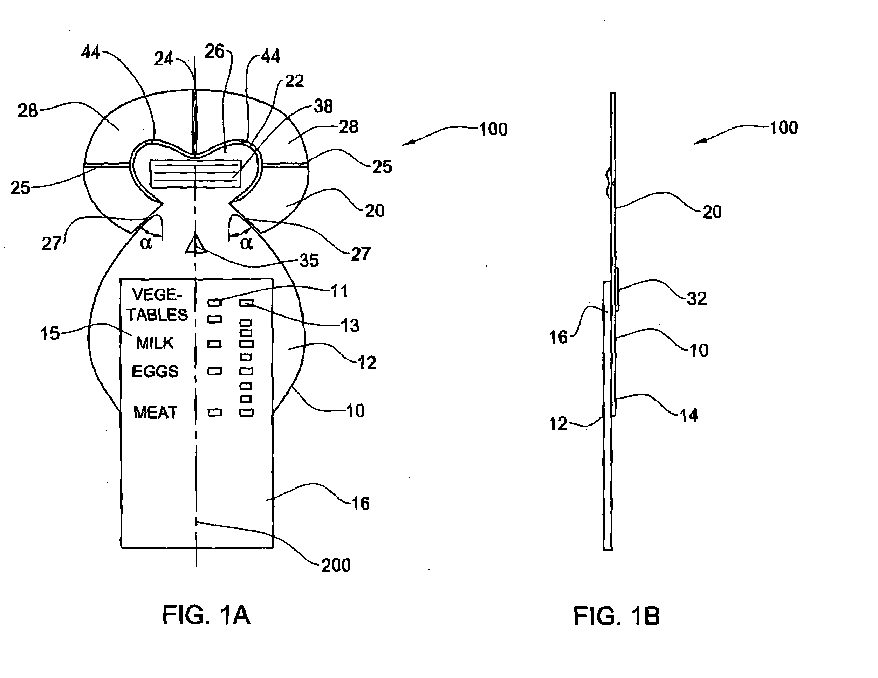

According to a first embodiment of the present invention, and referring to Figs. 1a and 1b, a display aid, generally designated with the numeral **100,** is typically formed from a one-piece blank. The aid **100** comprises a user interface portion **10** and a handle mounting portion **20**.

The user interface portion **10** comprises a substantially flat plate, having a front surface **12** on which a shopping list or the like may be written or attached, and a rear surface **14.** In the present embodiment, the portion **10** comprises a display pad **16** mounted on front surface **12**, and is overlaid a layer of dry erase material, on which items of a shopping list or the like may be written, to be erased at a later date and overwritten with a new list. Optionally, the layer of dry erase material may be permanently imprinted one or a plurality sets of indicia **15**. Each set may refer to a word or phrase indicative of a common item that may often appear on the list. A blank box **11** is provided in proximity to each item, and the box may be marked off by the user with a dry erase marker whenever the item is needed. This helps the shopping list to be created before shopping begins. Blank spaces may be left near the sets, optionally next to a list of boxes **11**, which serve to allow the user to write and erase items not found in the preprinted list. A second column of boxes **13** may be added to enable the user to tick off items as they are placed in the shopping cart, enabling the user to concentrate on the remaining items in a clearer manner.

The handle mounting portion **20** is made of a rigid though pliable sheet of material, e.g. plastic or cardboard, and comprises at its free end a cut line **22** dividing this end into a double-lobed base portion **26,** and a hook portion **24.** The hook portion **24** circumscribes the base portion **26** and is formed from two G-shaped strips **28** joined to each other via film hinge or fold line **29** aligned with a longitudinal axis **200** of the aid **100,** and to the remainder of the portion **20** via fold lines **27,** which are set at an angle α to axis **200.** Angle α is typically between about 30° and about 60°, and preferably about 45°. A further two fold lines **25** are provided, one in each strip **28,** arranged substantially orthogonally to axis **200,** and adapted to fold in a direction opposite to that of fold lines **27** or **29**.

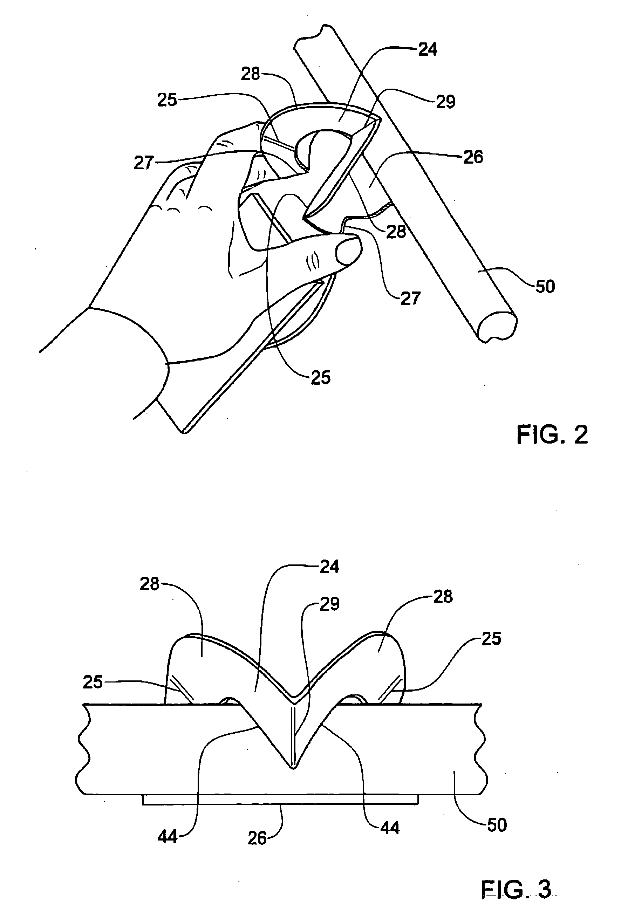

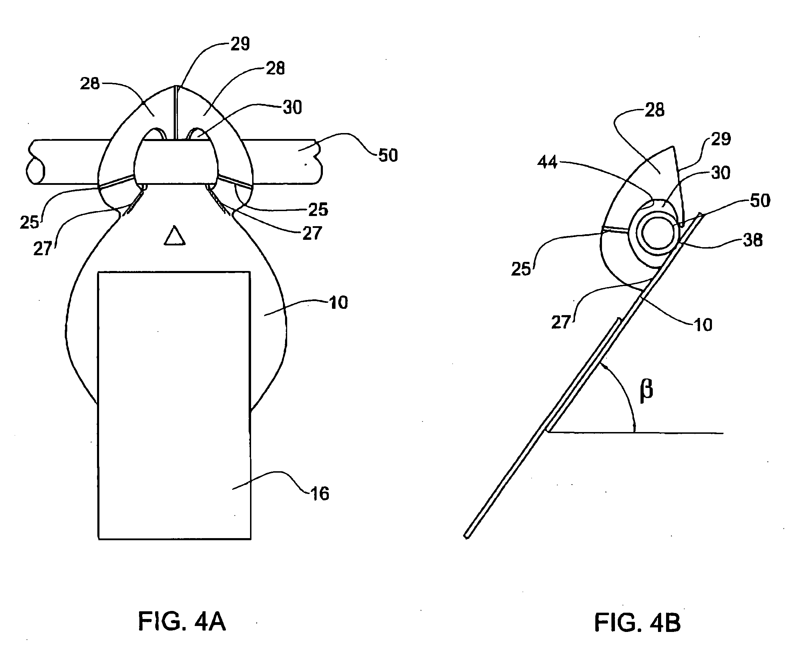

Referring to Fig 2, 3, 4a, 4b in particular, as the strips **28** are brought towards one another by folding about fold lines **27** and **29,** the hook portion **24** assumes a hook-like configuration above and opposite the base portion **26,** defining a zone or area **30** there between. The fold lines **25** assist the strips **28** to approach each other with minimal bending thereof. The dimensions of the hook portion **24** and base portion **26** are such that the area **30** is able to accommodate therein the cross-section of a standard shopping cart handle **50** or the like. The handle **50** is shown here as having a substantially circular cross-section for illustrative purposes. The handle **50** may have any suitable cross-sectional profile. The curvature of hook surfaces **44** and the area **30** may be large enough such that the aid **100** hangs freely from the handle **50,** and the base **26** acts as a guard to prevent the aid **100** from simply falling of the handle **50.** Alternatively, a smaller curvature for surfaces **44** and smaller area **30** may be provided, such that the handle **50** is abutted by both the surfaces **44** and base portion **26** with some pressure, provided by the resilience of the material from which the aid **100** is formed.

Referring to Figs. 1a and 1b, the base portion **26** may optionally comprise a friction inducing pad **38,** such as for example rubber or the like, mounted on the upper surface thereof and designed to abut the handle **50** to increase the grip of the aid **100** with respect to the handle **50.** Furthermore, the friction provided between the handle **50** and pad **38** enables the holder to be positioned at almost any desired angle of repose β to the horizontal.

Further optionally, the aid **100** comprises a magnetic pad **32** on the rear surface **14** for securing the aid to a refrigerator or similar device. Obviously, the magnetic pad may extend over the entire area of the rear surface **14** or at selected portions thereof. According to a particular embodiment, the entire display pad, or portions thereof may be made of a magnetic material. An aperture **35** may also be provided to hang the aid **100** from a suitable nail or hook that may protrude from a wall, door or the like. In each case, the aid is secured magnetically or via the aperture to a convenient location. According to a different arrangement, the rear surface **14** is provided with one member of a *hook and pile* fastener (Velcro™), whilst another member is attached to another surface, e.g. a refrigerator or the like, whereby the display list may be removably attached thereto. As various items require replenishment, they can be marked on the list if they correspond to items preprinted thereon, or may be written in the blank spaces provided.

In operation, as each item is selected and placed in the shopping cart, the mark or box **11** adjacent the description item may be erased. Alternatively, the second box **13** next to each item on the list may be marked as well. The second procedure enable the user to retain the original list, and compare the items procured vs. the items remaining. This has the advantage of enabling the user to determine whether a particular item (which may now be inaccessible in the cart) was actually included in the list and has been purchased, which is not possible when following the first procedure described above.

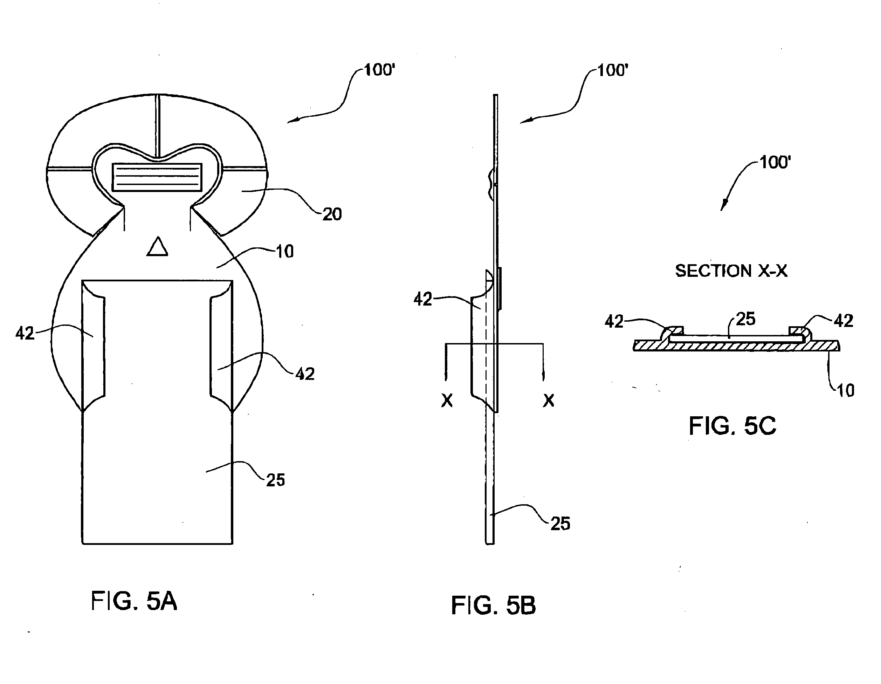

Referring to Figs. 5a, 5b and 5c, a second embodiment of the present invention comprises an aid **100'** substantially similar to the first embodiment as described herein with the following differences, mutatis mutandis. In the second embodiment, the display pad **16** is replaced with a single sheet of paper or a pad **25** comprising a plurality of sheets attached to the interface portion **10,** and these sheet(s) may be blank for the user to compose the list as desired, or may be preprinted in a similar manner to that described for the dry erasable layer, mutatis mutandis. The pad **25** may be attached to the interface portion **10** with an adhesive or the like. Typically, the pad **25** is held in the interface portion **10** by means of a contoured clip **42,** likely to be integrally formed with the interface portion **10**, and made from a resilient material that clamps the pad **25** to the portion **10.**

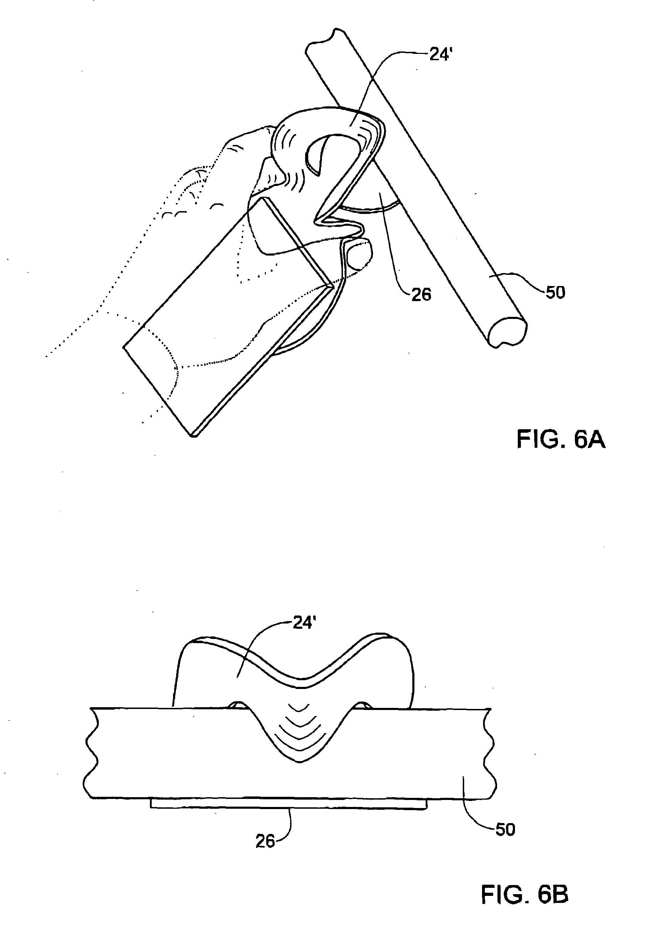

For this embodiment, or indeed for the first embodiment, optionally, and as illustrated in Figs 6a and 6b, the hook portion **24** is replaced with hook portion **24'** that does not comprise one or more of said fold lines **29, 25, 27**. Instead the resilience of the material from which the aid **100** is formed enables the portion **24'** to deform and bend such as to assume a hook-like configuration above and opposite the base portion **26,** in a similar manner to that described above for the earlier embodiment, mutatis mutandis.

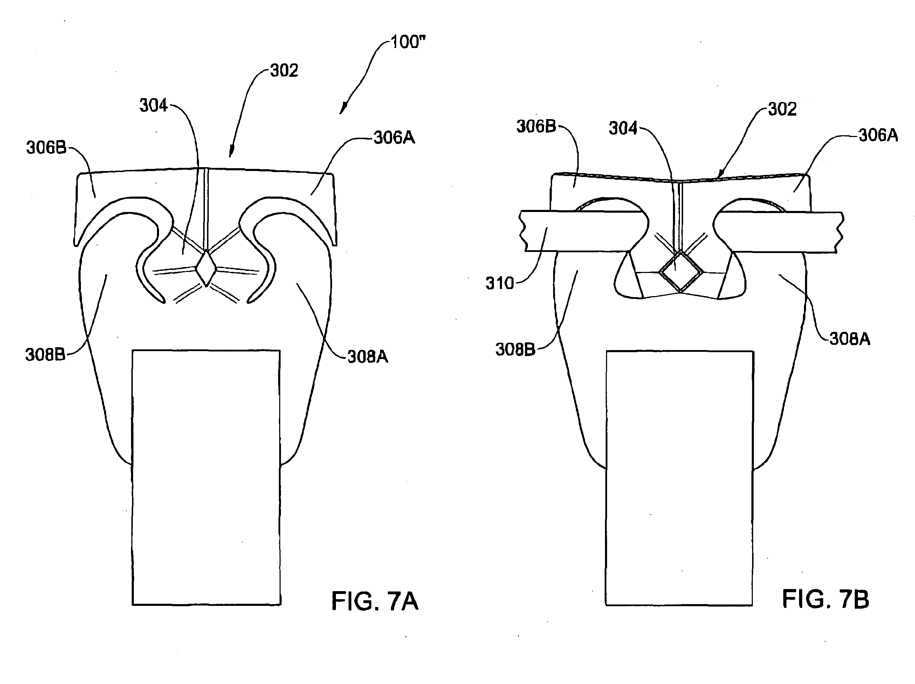

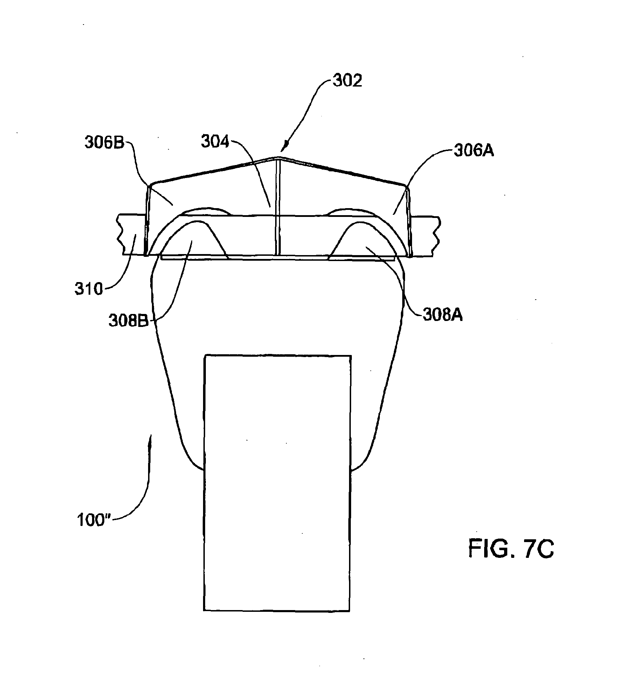

Referring to Figs. 7a, 7b and 7c, a further embodiment of the present invention comprises an aid **100"** substantially is similar to the first embodiment or to the second embodiment as described herein with the following differences, *mutatis mutandis*. According to this embodiment, there is provided a different hook portion **302** comprising a central portion **304** and two hook portions **306A** and 306b, and a base portion comprised of two such base portions **308A** and 308B. The arrangement is such that a planar position of the display aid (Fig. 7a) the hook portions **306A** and **306B** practically compliment the base portions **308A** and **308B**, respectively and where at the position mounted over a handle/push-bar **310** of a cart (not shown), the handle is clampingly received between the central portion **304** on one side and a pair of complimenting hook portion and base portion **(306A; 308A** and **306B, 308B),** respectively.

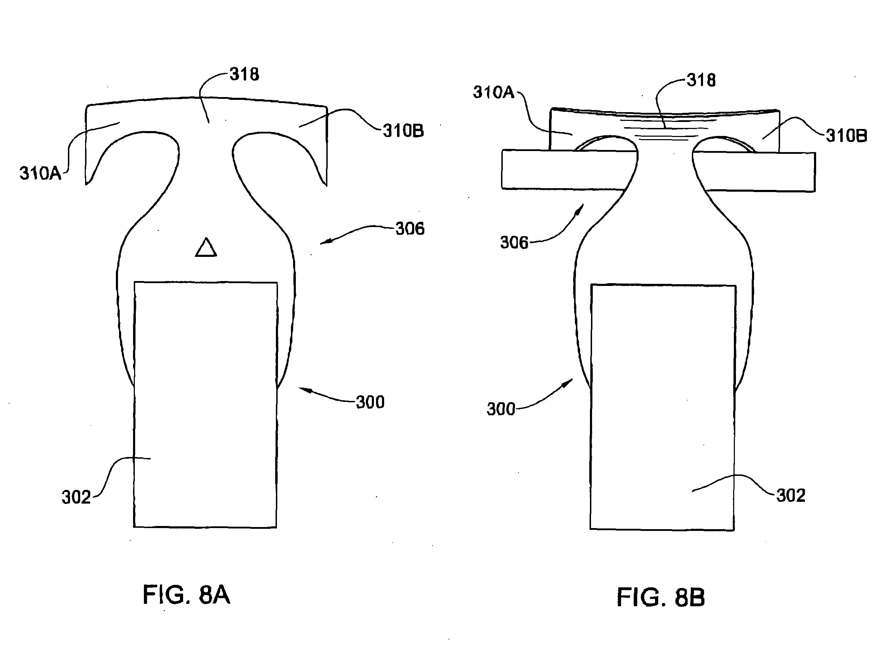

A modification of the third embodiment is illustrated in Figs. 8a and 8b where a display aid generally designated **300** comprises a user interface portion in the form of a writing pad **302** fixed to a handle mounting portion **306** made of a rigid though pliable material and formed with a pair of hooks **310A** and **310B.** at the initial position the handle mounting portion **306** is essentially flat, as in Fig. **8b.** However, upon bracing a handle **316** of a cart, e.g. shopping cart (not shown), the handle mounting portion **306** slightly bows about a central portion **318** thereof. Other features of the device are similar to any of the above referred to embodiments.

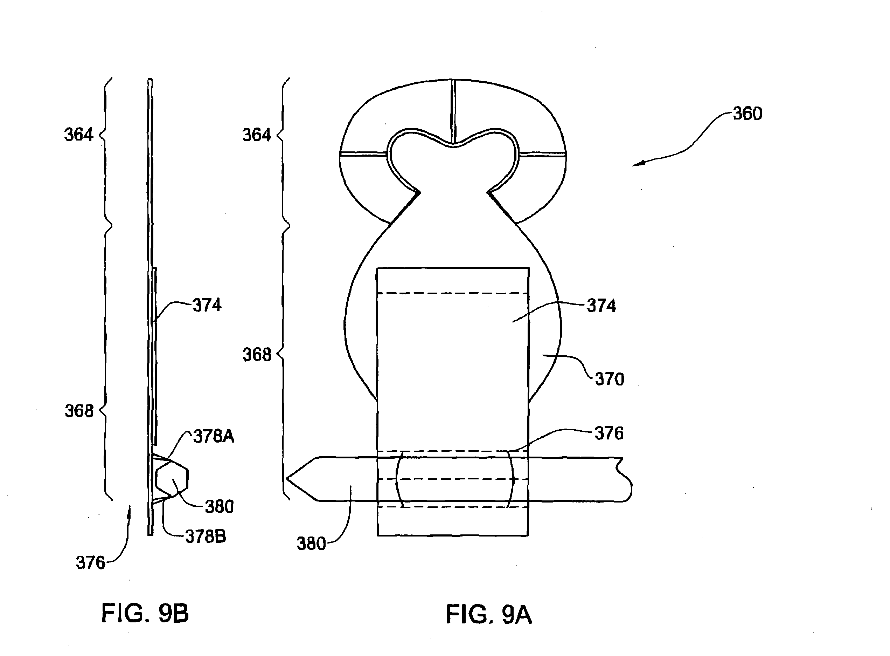

In the embodiment of Figs. 9a and 9b there is illustrated a display aid generally designated **360** comprising a handle mounting portion **364** similar to corresponding portion **20** in the embodiment of Figs. **1a** and **1b**,and a user interface portion **368** formed of a support portion **370** holding a pad **374** of detachable paper sheets and comprising at a bottom end thereof a writing utensil holder **376** in the form of two laterally folded flaps **378A** and **378B** supporting therebetween a pencil **380.** according to other embodiments, not shown, the writing utensil holder may be in the form of a cord extending from the display pad and attached to the writing utensil, or a clip or a hook and pile fastener (Velcro™), etc.

While the shopping aid of the present invention is typically of integral construction and made from a blank or molded from a suitable material it may be made, alternatively, from a plurality of suitably shaped parts mounted together in the appropriate manner.
Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A display aid comprising a user interface portion and a handle mounting portion, wherein said handle mounting portion is deformable between a first position in which it is substantially flat and a second position where it is deformed so as to attach over a handle of a cart.

2. A display pad according to claim 1, wherein at the second position the handle mounting portion assumes at least a portion circular portion attachable over the handle.

3. A display pad according to claim 1, wherein the handle mounting portion comprises a pair of hook portions for clasping onto the handle.

4. A display pad according to claim 1, wherein the handle mounting portion comprises at least a pair of first hooks and at least one counter member extending intermediate said hooks, which at the second position extend at opposite sides of the handle and bare onto it.

5. A display pad according to claim 1, wherein the handle mounting portion comprises a double-lobed base portion and a hook portion circumscribing the base portion.

6. A display pad according to claim 5, wherein the hook portions are joined to one another via an integral hinge or a film hinge extending about a central fold line of the handle mounting portion, and said hook portions are hinges at their other ends to a portion adjoining the user interface portion, at inclined fold lines by integral hinges or a film hinges.

7. A display pad according to claim 6, wherein the inclined fold lines extend at an angle if between about 30° and 60° with respect to the central fold line.

8. A display pad according to claim 6, wherein when the handle mounting portion is attached to a handle, the hooks partially embrace the handle.

9. A display aid according to claim 6, wherein upon depressing the hook portions towards one another they assume a butterfly like configuration giving rise to a handle bracing zone formed at the absent portion of the base portion.

10. A display pad according to claim 1, wherein when the display aid is attached to the handle it loosely dangles therefrom and is swingable about the handle.

11. A display aid according to claim 1, wherein the user interface portion comprises at a front surface thereof a data pad.

12. A display pad according to claim 2, wherein the data pad is a writing pad.

13. A display pad according to claim 1, wherein the user interface portion comprises an erasable writing surface.

14. A display pad according to claim 1, wherein the user interface portion comprises at least a partial preset list of items with a tic box associated with each item.

15. A display pad according to claim 1, wherein the user interface portion comprises a stack of paper.

16. A display pad according to claim 1, wherein the user interface portion comprises a writing utensil holding portion.

17. A display pad according to claim 1, wherein at least a portion of the display aid bears a commercial motive for advertisement purposes.

18. A display pad according to claim 16, wherein at least a front surface of the display aid comprises commercial display portion.

19. A display pad according to claim 16, wherein the display aid comprises at least a portion shaped in the form of a commercial element.

20. A display pad according to claim 1, wherein at least the handle mounting portion is made of a sheet of rigid though pliable material.

21. A display pad according to claim 20, wherein the at least handle mounting portion is made of a sheet of plastic material.

22. A display pad according to claim 20, wherein the at least handle mounting portion is made of a sheet of cardboard.

23. A display pad according to claim 1, wherein the user interface portion and the handle mounting portion are integral.

24. A display aid according to claim 1, comprising an attachment arrangement for keeping the display aid while not attached to the cart.

25. A display aid according to claim 24, wherein the attachment arrangement is an opening for hanging the aid from a hook.

26. A display device according to claim 24, wherein the attachment arrangement is a sheet of magnetic material.

27. A display device according to claim 24, wherein the attachment arrangement is a one of a hook and pile couple adapted for engagement with another of the hook and pile couple.

28. A display aid according to claim 1, being a shopping list.

29. A display aid comprising a user interface portion and a handle mounting portion, wherein said handle mounting portion comprises at least a pair of hooks for removable bracing at least a portion of a handle of a cart such that when it is mounted over the handle said user interface portion loosely dangles.

30. A display aid comprising a user interface portion and a handle mounting portion, wherein said handle mounting portion is removably attachable to a handle of a cart by at least partially embracing a portion of the handle.
